# EUROPÄISCHE PATENTSCHRIFT

(11) **EP 2 621 269 B1**
(45) Veröffentlichungstag und Bekanntmachung des Hinweises auf die Patenterteilung: **19.11.2014**
(21) Anmeldenummer: 10763337.2
(22) Anmeldetag: 27.09.2010
(51) Int. Cl.: A01M 29/16, A01M 29/18

(54) **VORRICHTUNG ZUM VERTREIBEN VON VÖGELN MITTELS SCHALLSCHWINGUNGEN**
DEVICE FOR DRIVING AWAY BIRDS BY MEANS OF ACOUSTIC OSCILLATION
DISPOSITIF POUR EFFRAYER LES OISEAUX AU MOYEN D'ONDES ACOUSTIQUES

(43) Veröffentlichungstag der Anmeldung: 07.08.2013
(73) Patentinhaber: Kocher-Kunz, Susanne, 4055 Basel (CH)
(72) Erfinder: Kocher-Kunz, Susanne, 4055 Basel (CH)
(74) Vertreter: Schneider Feldmann AG Patent- und Markenanwälte
(86) Internationale Anmeldenummer: PCT/EP2010/064253
(87) Internationale Veröffentlichungsnummer: WO 2012/041361

(56) Entgegenhaltungen:
- EP-A1- 0 037 109
- DE-U1-202006 015 798

## Beschreibung

Die vorliegende Erfindung betrifft eine Vorrichtung zum Vertreiben von Vögeln durch Beaufschlagung eines Raumbereiches mit Schallschwingungen im Ultraschallbeziehungsweise Ultraschallnahenbereich, umfassend mindestens einen Resonator zur Abstrahlung der Schallschwingungen, wobei der mindestens eine Resonator in einer Halterung drehbar gelagert ist.

Die Verwendung von Ultraschallwellen zum Vertreiben von Kleinnagetieren, wie Ratten und Mäuse ist bereits aus der CH-A 440 821 bekannt. Hier wird der sensitive Bereich noch sehr weit, nämlich zwischen 15 und 100 kHz angegeben. Über die Jahre hinweg hat man vermehrt Untersuchungen durchgeführt und insbesondere auch mittels Schallschwingungen im Ultraschallbeziehungsweise im Ultraschallnahenbereich gearbeitet um damit Vögel zu vertreiben beziehungsweise aus einem Raumbereich fernzuhalten. Gemäss dem Dokument DE-A-2708298 vertrat man dabei die Ansicht, dass hierzu in einem Gerät mehrere Resonatoren die in verschiedenen Resonanzfrequenzen arbeiten erforderlich seien, wobei man diese Signale überlagert und moduliert hat. Insbesondere war man der Überzeugung das hierdurch ein Gewöhnungseffekt vermieden werden kann. Bei dieser Vorrichtung zum Verscheuchen von Vögeln waren die mindestens zwei Schallresonatoren in gleicher Strahlungsrichtung übereinander angeordnet in einem sogenannten Drehturm, sodass ein Raumbereich um den Drehturm in möglichst flächiger Ausstrahlung mit möglichst grossem Wirkungskreis erzielbar sein sollte. Solche Geräte wurden insbesondere in der Landwirtschaft eingesetzt. Der Wirkungskreis wird einerseits durch die Schallintensität bestimmt aber des weiteren beeinflussen auch Umweltbedingungen diesen Wirkungsbereich. Hierzu gehören insbesondere die geografische Struktur, die Bepflanzung im beschallten Bereich sowie insbesondere auch die vorhandenen Luftbewegungen.

Der hohe gerätetechnische Aufwand zahlt sich jedoch nur bei einer Vogelpopulation aus, die nicht durch ständigen Wechsel von grossen und kleinen Arten gekennzeichnet ist. Letzteres bedingt einen hohen Steuerungsaufwand und ein überstreichen grösserer Frequenzbereiche, so dass "Pausen" entstehen, in denen sich die jeweils nicht betroffenen Vogelarten niederlassen können.

In einer späteren Anmeldung hat derselbe Erfinder seine früheren Überlegungen und Untersuchungen präzisiert. Hierbei hat er festgestellt, dass praktisch alle Vögel auf Frequenzen im Bereich zwischen Rund 20 und 26 kHz reagieren. Hinzu kommt, dass er festgestellt hat, dass die Modulation der Schallschwingungen auf das Federkleid der Vögel wirkt. Heute geht man davon aus, dass die Wahrnehmung der niederfrequenten Schwingungen mittels dem Federkleid ein Warnsystem für die Vögel ist bezüglich eines möglichen Angriffes aus der Luft. Die hochfrequenten Schallschwingungen führen zu Schwingungen des Schädelknochens, sodass ein Vogel der in einen solchen beschallten Raum eindringt sogleich im Flug hierauf reagiert und abdreht. Praktisch alle heute auf dem Markt vorhandenen Vorrichtungen zum Vertreiben von Vögeln arbeiten nach diesen Prinzipien.

Eine weitere Vergrämungsvorrichtung ist aus DE20 2006 015 798 U1 bekannt. Diese offenbart den Oberbegriff des Anspruchs 1.

Weiterhin offenbart die EP-B-0037109 eine Einrichtung zur Vertreibung von Vögeln und Klein-Nagetieren durch Beaufschlagung mindestens eines Raumbereiches mit einer ersten Schallschwingung, wobei diese erste Schallschwingung mit mindestens einer zweiten, niederfrequenteren Schallschwingung moduliert ist, wobei die Einrichtung einen Resonator zur Abstrahlung der Schallschwingungen umfasst, der um zwei zueinander im Winkel angeordnete Achsen drehbar gelagert und angetrieben ist. Insbesondere die Niederfrequenzkomponente soll über das Federkleid als störend empfunden werden.
Bevorzugt soll der zu beschallende Raum möglichst lückenlos von der sich drehenden Einrichtung bestrichen werden. An oder auf Gebäuden ist der dabei überstreichbare Raum jedoch baulich begrenzt.

Seit den 70er Jahren werden diese Vorrichtungen weit mehr in Städten eingesetzt für den Gebäudeschutz, damit die Fassaden von Gebäuden von Vogelkot verschont bleibt. Gebäudefassaden haben oft eine ausgesprochen komplexe Struktur und die deckende Beschallung einer solchen Fassade ist relativ komplex. Um eine solche Fassade wie beispielsweise von historischen Gebäuden, wie Kirchen, Bahnhöfen, Schlössern etc. zu schützen sind eine Vielzahl solcher Geräte erforderlich. Eine rein flächige Abstrahlung, wie dies noch mit den Geräten gemässe der DE-A-2708298 möglich war, konnte dabei nicht mehr genügen. Entsprechend hat man diese Vorrichtung gemäss dem hier interessierenden, nächstliegenden Stand der Technik, der EP-0 037 109 gebaut. Hier wurde ein einziger Resonator einerseits um eine horizontale Achse gedreht, die man in einer gabelförmigen Halterung festhielt während man die gabelförmige Halterung selbst um eine vertikale Achse rotiert. Diese Vorrichtungen sind nun bereits seit über 20 Jahren im Einsatz und deren Wartung ist relativ unproblematisch, müssen doch lediglich von Zeit zu Zeit die Antriebsriemen ersetzt werden, die Geräte gereinigt und geschmiert werden. Je nach Aufstellungsort geht man heute von einer Revisionsperiode von zirka 3 bis 5 Jahren aus.

Neben den komplexen Fassadenstrukturen ist ein weiteres Problem die erforderliche Energiezufuhr zu den Aufstellungsorten der Geräte. Insbesondere an historischen Gebäuden ist man folglich bemüht möglichst wenig, möglichst unauffällig solche Geräte zu platzieren um das äussere Erscheinungsbild nicht zu beeinflussen und einen möglichst geringen Verkabelungsaufwand zu haben. Dank dem einerseits um eine x-Achse rotierenden Resonator und andererseits um eine y-Achse gedreht werdender Resonator kann nun ein Raumbereich vor einer Fassade umfassend geschützt werden. Hierdurch wird bereits der Anflug der Vögel verhindert. Problematisch ist jedoch, dass an sich die Rotation weder um die Horizontalachse noch um die Vertikalachse eine zu hohe Geschwindigkeit haben sollte, da ansonsten das Schallbild zu stark gestört wird und seine Wirkung verliert. Mit andern Worten man hat festgestellt, dass bei höherer Rotationsgeschwindigkeit zwar die räumliche Schallabdeckung verbessert wird indem kaum noch Vögel den beschallten Raum durchdringen, gleichzeitig aber hat sich dadurch der Wirkungsbereich verkleinert. Durch die erhöhte Rotationsgeschwindigkeit wurde damit zwar vermieden, dass Vögel auch nur kurzfristig auf einer derart geschützten Fassade absetzen oder sogar auch nur in einen nahen Bereich kommen, andererseits jedoch waren entferntere Bereiche kaum noch wirkungsvoll geschützt. Entsprechend wurde es erforderlich die Dichte der Geräte an der Fassade zu erhöhen, dies hat aber zu erhöhten Kosten geführt, zu ästhetischen Problemen an denkmalgeschützten Fassaden und die höhere Drehgeschwindigkeit hat zudem dass Revisionsintervall wesentlich verkürzt. Die schneller drehenden Geräte mussten zum Teil nach ein bis zwei Jahren wieder revidiert werden. Es ist daher die Aufgabe der vorliegenden Erfindung eine Vorrichtung zum Vertreiben von Vögeln gemäss Oberbegriff des Patentanspruches 1 zu schaffen welche Vorrichtung die erhöhte räumliche Abdeckung beibehält während gleichzeitig die Reichweite wieder erhöht werden soll und zudem die Revisionsintervalle wieder verlängert werden sollen.
Diese Aufgabe löst die vorliegende Erfindung, dadurch dass die Vorrichtung ein Gehäuse aufweist in dem mindestens ein Resonator in Drehrichtung gleichmässig über den Umfang verteilt angeordnet sind, wobei das Gehäuse auf einer drehfesten Achse gelagert ist in der ein Elektromotor und ein Getriebe angeordnet sind, und dass der Abtrieb des Getriebes auf das Gehäuse wirkt und dieses in Drehbewegung versetzt, wobei die Speisung der Resonatoren und des Elektromotors durch die drehfeste Achse hindurch erfolgt, und dass weiterhin der Resonator in einem Resonatorraum angeordnet ist.
Dank des Gehäuses lassen sich mehrere Resonatoren in Drehrichtung am Unfang verteilt anordnen, so dass eine wesentlich geringere Rotationsgeschwindigkeit erforderlich ist und gleichzeitig aber die Abfolge der Beschallung hoch gehalten werden kann.

Dank der Anordnung des Antriebes im Gehäuse selbst ist dieser Antrieb bestens geschützt und gegen Umwelteinflüsse annähernd immun. Dank der kleineren Rotationsgeschwindigkeit der einzelnen Resonatoren wird ein verzerren des Signales verringert und damit die wirkende Reichweite erhöht. Dank der erhöhten Reichweite brauchen folglich weniger Geräte auf einer Fassade angebracht werden, was insbesondere kostensparend aber vor allem auch ästhetisch erforderlich ist.
Ebenso sollen insbesondere Vögel unterschiedlicher Grösse, wie z. B. Sperlinge oder Tauben einerseits und Krähen, Möwen oder Gänse andererseits vertrieben werden und bei geringem Aufwand soll eine Vertreibung verschieden grosser Vogelarten auf möglichst grossem Raum, bevorzugt an und/oder auf Gebäuden oder anderen Bauwerken ermöglicht werden.
Dabei wirkt auch der erzeugte Schalldruck auf das Gefieder. Durch Ansteuerung von mindestens einem Ultraschall-Resonator über eine Ring- oder BUS-Leitung ist einerseits eine Programmierung des Resonators über diese Leitung gegeben und andererseits wird der Steuerungsaufwand gering gehalten, da die eigentliche Steuerung des Resonators im Gehäuse selbst angeordnet ist und in programmiertem Zustand nur noch die Energieversorgung extern via Leitung erfolgt.
Dies ermöglicht selbst die Anordnung von ca. 50-100 Resonatoren über eine Entfernung bis zu 1000m. Die Resonatoren sind flexibel und separat sowie sich selbst steuerbar. Dies ermöglicht eine bis zu 60% höhere Effizienz der Einrichtung, da die Resonatoren durch entsprechende Programmierung gleichzeitig oder in variablen Abständen betreibbar sind, bevorzugt ein- und/oder zweidimensional schwenkbar sind.
Der Resonator bildet eine eigene Einheit.
Als weiterer Vorteil ergibt sich die Möglichkeit einer einfachen Temperaturanpassung, da ansonsten die abgestrahlten Frequenzen temperaturabhängig schwanken (tiefere Temperaturen z. B. erfordern eine höhere Energiezufuhr um ein Sinken der Frequenz zu vermeiden).

Bisherige Einrichtungen erfordern eine permanente, externe und zentrale Steuerung der Resonatoren und/oder die Resonatoren konnten zeitlich nur nacheinander betrieben werden, was zudem die Entfernung von der Steuerbox auf ca. 100m begrenzte.
Je nach zu erwartender Vogelart können mehrere Resonatoren mit nur einer Steuerungseinheit gesteuert werden. Es können verschieden grosse Vogelarten an spezifischen Plätzen beeinflusst werden, z. B. kleinere Vögel auf Fenstersimsen und grössere Vögel auf Dächern oder Skulpturen.
Statt wie beim Stand der Technik Frequenzen der Resonatoren zu modulieren, werden (je nach Vogelgrösse) konstante Frequenzen programmiert und verwendet. Zusätzlich können Erfahrungswerte nach Beobachtung einfliessen.
Bevorzugt ist ein Frequenzbereich von 20-26 kHz. Es ist dabei bekannt, dass die erforderliche Frequenz umgekehrt proportional zur Vogelgrösse ist.

Weitere vorteilhafte Ausgestaltungsformen der erfindungsgemässen Vorrichtung gehen aus den weiteren abhängigen Patentansprüchen hervor und deren Bedeutung und Wirkungsweise wird in der nachfolgenden Beschreibung erläutert mit Bezug auf die anliegenden Zeichnungen. In der Zeichnung ist ein bevorzugtes Ausführungsbeispiel des Erfindungsgegenstandes dargestellt und nachfolgend im Detail beschrieben. Es zeigt:

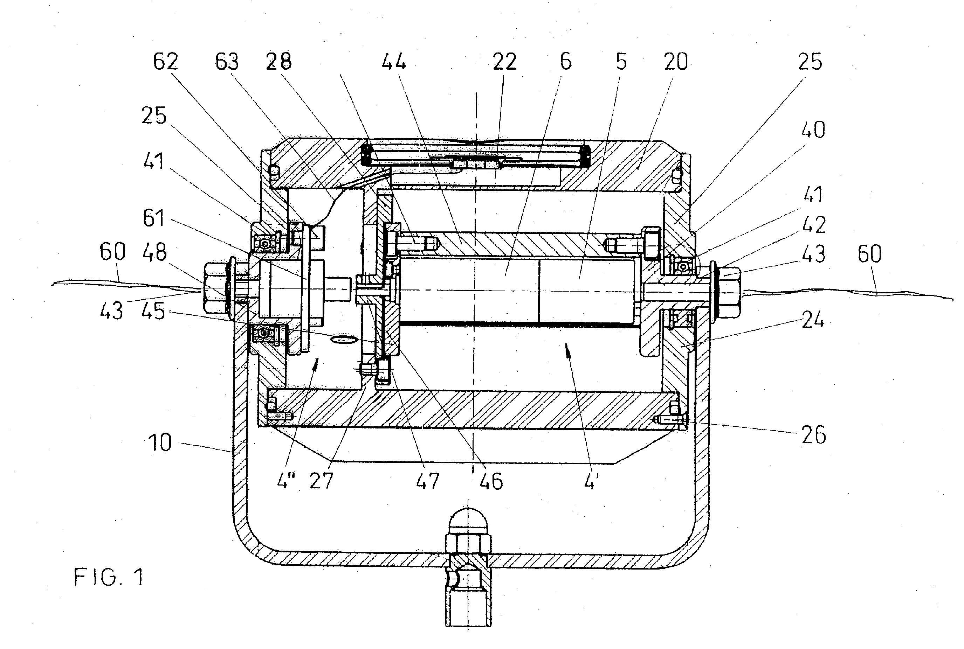

- Figur 1: einen Längsschnitt durch die erfindungsgemässe Vorrichtung durch die zentrale horizontale Achse und

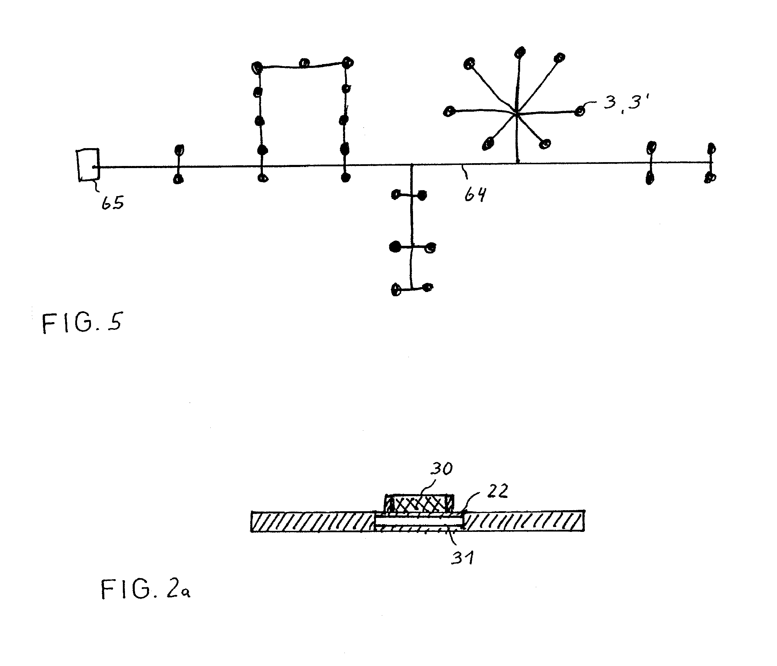

- Figur 2: ein weiterer Vertikalschnitt durch dasselbe Ausführungsbeispiel des Erfindungsgegenstandes senkrecht zur horizontalen Rotationsachse entlang der Linie A-A in Figur 1,
- Figur 2a: zeigt einen Resonator,
- Figur 3: zeigt eine Seitenansicht der bevorzugten Ausführungsform der Vorrichtung und
- Figur 4a: zeigt eine perspektivische isometrische Darstellung derselben Vorrichtung,
- Figur 4b: zeigt eine Vorrichtung mit Schwanenhals und einem Resonator,
- Figur 5: zeigt eine mögliche Anordnung von Vorrichtungen.

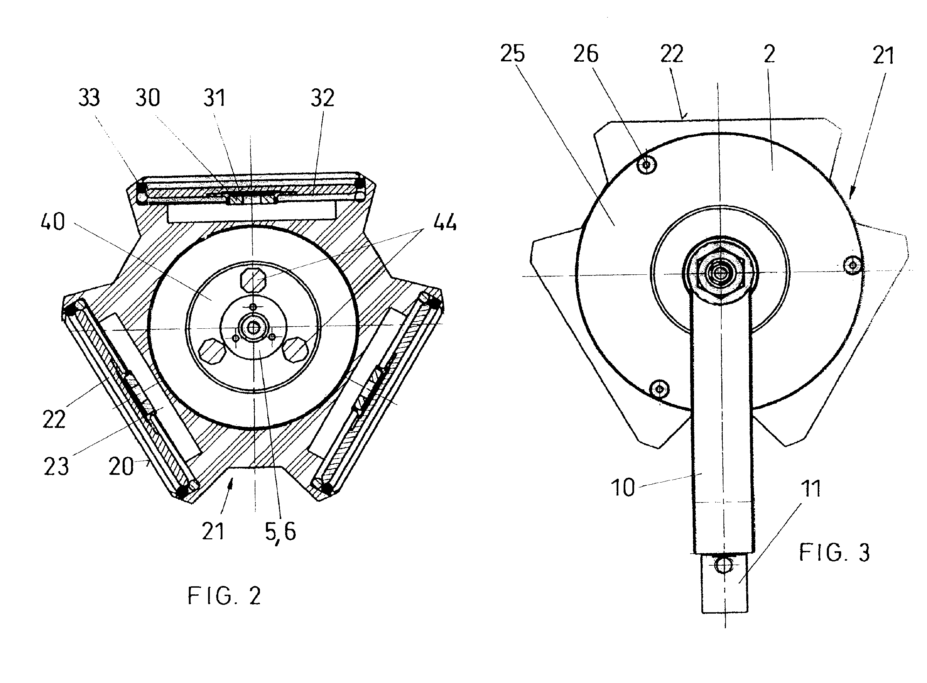

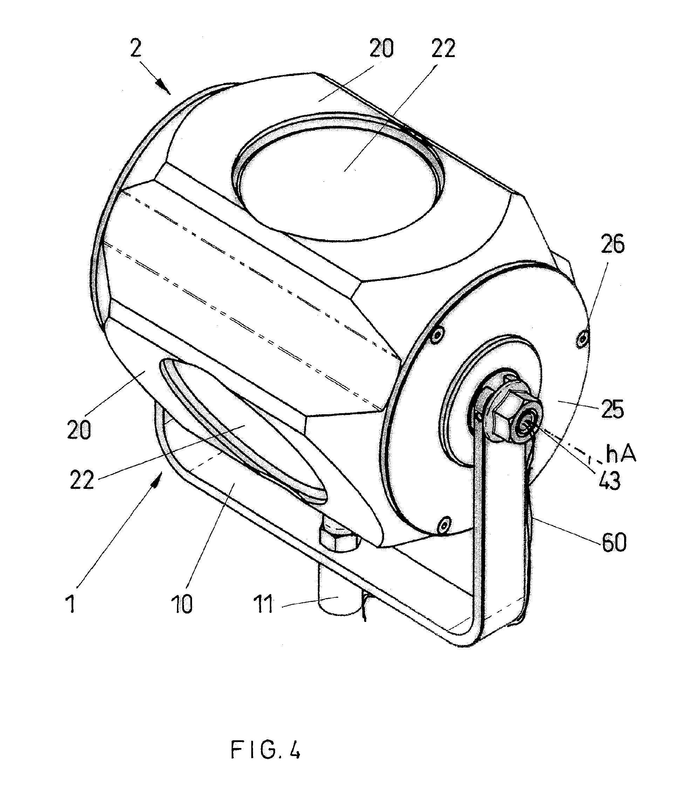

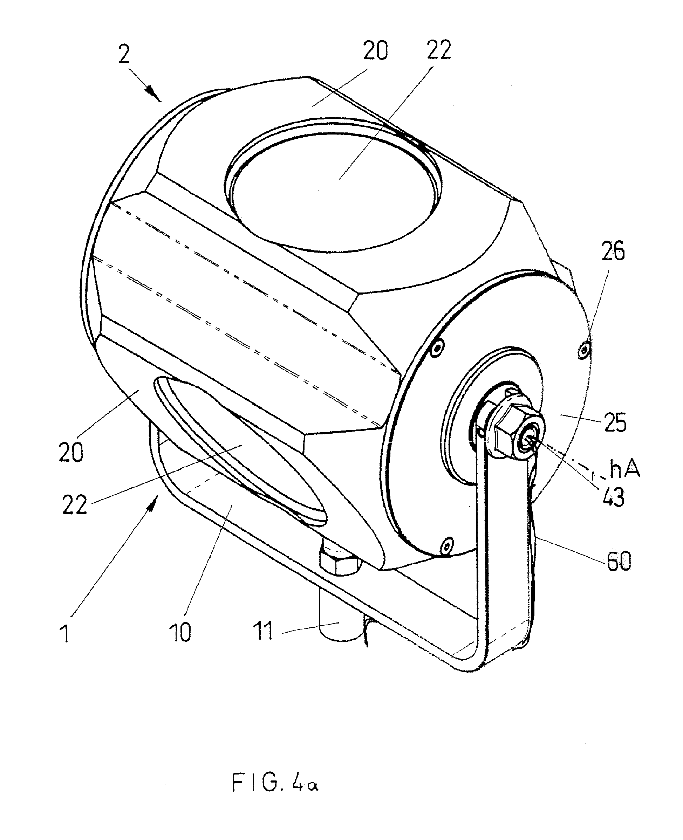

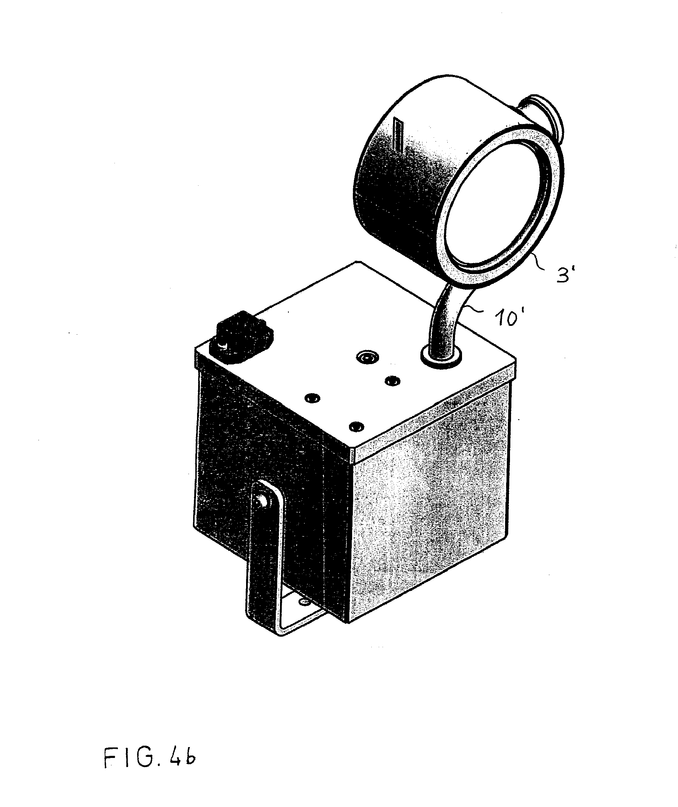

Der generelle Aufbau der erfindungsgemässen Vorrichtung zum Vertreiben von Vögeln durch Beaufschlagung eines Raumbereiches mit Schallschwingungen im Ultraschall beziehungsweise im ultraschallnahen Bereich ist am deutlichsten in den Ansichten gemäss den Figuren 3 und 4 ersichtlich. Die Vorrichtung ist insgesamt mit 1 bezeichnet. Sie umfasst ein Gehäuse 2 in dem mehrere Resonatoren 3 untergebracht sind sowie eine gabelförmige Halterung in der das Gehäuse 2 gehalten ist. Diese gabelförmige Halterung 10 oder ein Schwanenhals 10' kann selbst ebenfalls dreh- und/oder schwenkbar gelagert sein, so dass die Resonatoren um zwei senkrecht zueinander verlaufenden Achsen gleichzeitig gedreht werden können. Für eine reine Fassadenabdeckung kann jedoch auch die Drehung um die horizontale Achse, welche in der Gabelhalterung oder Schwanenhals gehalten ist genügen. Hierbei bedeutet die horizontale Achse nicht eine absolut horizontale Achse sondern lediglich als Relationsangabe. Je nach der Montage kann dabei die sogenannt horizontale Achse durchaus jede beliebige andere Lage einnehmen. Wird die Vorrichtung beispielsweise so an einer Fassade montiert, dass die Halterungsachse 11 an der die gabelförmige Halterung 10 gehalten ist, senkrecht zur Fassade montiert, so könnte die gabelförmige Halterung 10 in einer Ebene parallel zur Fassade gedreht werden und die horizontale Achse würde dann in einer ebensolchen dazu parallel verlaufenden Ebene sich drehen. Das Gehäuse 2 dreht sich immer um diese horizontale Achse hA.

Das Gehäuse 2 hat im wesentlichen die Gestalt eines mehrseitigen Zylinders wobei die Anzahl der Zylinderseiten gleich der Anzahl der Resonatoren 3 ist. Im vorliegenden Beispiel ist das Gehäuse 2 praktisch mit drei Seitenflächen versehen, und lediglich der Bereich zwischen den Längsseitenkanten ist dabei weggeschnitten um einerseits das Volumen zu reduzieren und andererseits Gewicht einzusparen sowie die Oberfläche zu vergrössern um eventuell eine gewisse Erwärmung durch eine möglichst grosse Oberfläche ableiten zu können. Während die Aussenfläche des Gehäuses 2 somit hier drei Seitenflächen aufweist, sind zwischen diesen Seitenflächen 20 Ecknuten 21 vorhanden. In den Seitenflächen 20 sind zylindrische Mulden 22 eingefräst. In diesen zylindrischen Mulden 22 sind elastisch und dichten gehalten die Resonatoren 3 angeordnet. Die zylindrischen Mulden 22 weisen eine innere Kernmulde 23 auf und in dieser Kernmulde ist hier die elektrische Erregerschaltung unterbringbar, die hier jedoch nicht im einzelnen dargestellt ist. Diese Erregerschaltung wirkt auf einen Schwingungsquarz 30, der seine Schwingungen an eine Membran 31 weitergibt. Die Membran 31 überträgt diese Schwingungen wiederum an eine Schwingungsplatte 32, die mittels O-Ringen 33 im erweiterten Bereich der zylindrischen Mulde 22 beweglich gelagert ist.

Das Gehäuse 2 besitzt einen zylindrischen Innenraum 24. Dieser zylindrische Innenraum 24 wird beidseitig durch aufgeschraubte Deckel 25 verschlossen. Die Schrauben 26 dienen der Befestigung dieser Deckel 25 am Gehäuse 2.

Funktionsbedingt werden die Seitenflächen 20 des Gehäuses 2 nachfolgend als Abstrahlungsflächen bezeichnet und die zylindrischen Mulden 22 als Resonatorraum.

Im kreisförmigen Deckel 25 ist zentrisch ein kreisförmiges Loch eingeformt in dem ein äusserer Lagerflansch 40 mittels einem Kugellager 41 im Deckel 25 gelagert ist. Dieser Lagerflansch 40 besitzt einen hohlen Zapfen 42 in den eine Hohlschraube 43 eingeschraubt ist. Diese Hohlschraube 43 dient der kraftschlüssigen Halterung der Vorrichtung 1 in der gabelförmigen Halterung 10. Auf dem äusseren Lagerflansch 40 sind im dargestellten Beispiel drei Distanzbolzen 44 angeschraubt, die auf den gegenüberliegenden Seiten mit einem inneren Lagerflansch verbunden sind. Zwischen dem äusseren Lagerflansch 40 und dem inneren Lagerflansch 45 sowie zwischen den Distanzbolzen 44 verbleibt somit eine Art käfigförmiger Raum und in diesem Raum sind hintereinander ein Elektromotor 6 und ein Getriebe 7t, nämlich ein Untersetzungsgetriebe, angeordnet. Die beiden Lagerflansche 40 und 45 sowie die Distanzbolzen 44 bilden so einen ersten Teil einer zweigeteilten drehfesten Achse. Dieser erste Teil der drehfesten Achse ist mit 4' bezeichnet. Während das drehende Gehäuse 2 bei äusseren Lagerflansch 40 auf einem Kugellager gelagert ist, ist der innere Flansch 45 in einer Gleitlagerplatte zentriert gehalten gelagert. Diese Gleitlagerplatte weist eine zylindrische Mulde auf deren Grösse mit geringem Spiel der Grösse des inneren Lagerflansches 45 entspricht. Die Gleitlagerplatte 46 ist mit dem Gehäuse 2 fest verbunden. Die Gleitlagerplatte 46 besitzt einen hohlen Zapfen 47 und der Abtrieb des Getriebes 6 greift in diesen hohlen Zapfen 47 ein und ist mittels einer Arretierschraube fest mit diesem hohlen Zapfen 47 verbunden und treibt somit die Gleitlagerplatte 46, welche peripher mit dem Gehäuse 2 verschraubt ist. Hierzu weist das Gehäuse 2 eine radial nach innen gerichtete, umlaufende Ringwand 27 auf. Diese Ringwand 27 ist einstückig mit dem Gehäuse 2 verbunden.

Der Elektromotor 6 wird über elektrische Leitungen 60 gespiesen. Diese elektrischen Leitungen 60 lassen sich problemlos durch die Hohlschraube 43 und den äusseren Lagerflansch 40 beziehungsweise dessen hohlen Zapfen 42 direkt zum Elektromotor zuführen.

Auf der gegenüberliegenden Seite ist ein gleicher Deckel 25 vorhanden, der ebenso ein zentrisches Loch aufweist und in diesem zentrischen Loch ist eine topfförmige Hülse gehalten, welche wiederum mittels eines Kugellagers drehbar bezüglich des Deckels und damit bezüglich des Gehäuses 2 gelagert ist. Die topfförmige Hülse 48 weist am offenen Ende einen umlaufenden Kragen 49 auf. An diesem umlaufenden Kragen 49 ist zum Inneren des Gehäuses gerichtet ein elektrischer Schleifring 61 isoliert befestigt. An diesem Schleifring 61 liegt eine Spannung an, die wiederum mittels Speiseleitungen 60 von aussen durch eine entsprechende Hohlschraube 43 nach innen geführt wird. Der Stromabnehmer 62 ist fix mit dem rotierenden Gehäuse 2 verbunden, so dass der Stromabnehmer 62 auf dem elektrischen Schleifring 61 gleitet. Vom Stromabnehmer 62 führen elektrische Leitungen zur elektronischen Schaltung welche den Schwingungsquarz 30 erregen.

Der gesamte zylindrische Innenraum 24 wird durch die Gleitlagerplatte 46 und der umlaufenden Ringwand 27 in zwei Räume unterteilt, wobei der erste Raum als Antriebsraum bezeichnet wird, indem der bereits genannte erste Teil der drehfesten zweigeteilten Achse sich befindet, während der zweite Raum als Speiseraum bezeichnet wird indem der zweite Teil der zweigeteilten drehfesten Achse 4' sich mit dem Gleitring und dem Stromabnehmer befinden. Vom Speiseraum fährt eine Bohrung 28 in den Resonatorraum 22.

Dank dieser ungewöhnlichen Ausgestaltung der erfindungsgemässen Vorrichtung zum Vertreiben von Vögeln durch Beaufschlagung eines Raumes mit Schallschwingungen im Ultraschall beziehungsweise im ultraschallnahen Bereich werden wesentliche Vorteile erzielt. Dank mehreren Resonatoren die in Drehrichtung hintereinander angeordnet sind wird bei gleicher Rotationsgeschwindigkeit der entsprechende Raumbereich dreimal häufiger mit Ultraschall beaufschlagt. Hierdurch erzielt man, dass die Vögel im Anflug auf ein Gebäude bereits abdrehen und sich nicht kurzfristig dort absetzten um wieder wegzufliegen. Würde man mit einem einzigen Resonator arbeiten, so wäre zwar der konstruktive Aufwand wesentlich kleiner, man müsste jedoch die Rotationsgeschwindigkeit erhöhen. Dies würde aber sogleich dazu führen, dass die Verschliessteile einem höheren Verschliess unterliegen und wie praktische Versuche gezeigt haben reduziert sich dadurch der Wirkungsradius um bis zu einem Drittel. Folglich müsste um eine gleiche Fassadenfläche abzudecken rund neun mal mehr Vorrichtungen angebracht werde mit dem entsprechenden Verdrahtungsaufwand. Dieses Problem des Verdrahtungsaufwandes wurde gleichzeitig reduziert indem nicht mehr wie bisher alle Geräte von einem Steuergerät aus mit dem entsprechenden Signalen bedient wurden, sondern indem nun der eigentliche Schaltkreis direkt im Resonatorraum untergebracht ist. Dieses ist mit den heute üblichen integrierten Schaltkreisen die auf dem Markt preisgünstig erhältlich sind problemlos möglich. Dank der Erfindung wird somit eine effizientere Vorrichtung erreicht, die eine längere Lebensdauer aufweist, einen grösseren Wirkungskreis und dadurch insgesamt im Betrieb Kosten spart.

Im vorliegenden Fall wurde zumeist davon gesprochen, dass die erfindungsgemässe Vorrichtung zur Schallbeaufschlagung von Gebäudefassaden verwendet wird. Dies ist einer der häufigsten Anwendungen. Zugleich werden aber solche Vorrichtungen auch verwendet um Möwen von Yachten oder anderen Schiffen abzuhalten. Die hierdurch zu ersparenden Reinigungskosten sind enorm.

Des weiteren lassen sich selbstverständlich solche Geräte auch in Agrargebieten beispielweise in Rebanbaugebieten oder in Kirschbäumen anwenden. Im Gegensatz zu den üblichen Netzen kommen hierbei Vögel nicht zu Schaden ebenso wenig werden Anwohner belästigt, wie dies bei sogenannten Vogelkanonen der Fall ist. Schliesslich lassen sich mit solchen Vorrichtungen auch die Gebiete der Flughäfen besser sichern um damit sogenannte Bird Strikes weitgehend zu verhindern.
Die Anordnung umfasst im gewählten Beispiel drei Ultraschall-Resonatoren 3', die an verschiedenen Stellen eines Gebäudes (Fenstersims, Dachbereich) zweidimensional schwenkbar angeordnet sind. Diese Ultraschall-Resonatoren 3' sind sind via BUS-Leitung 64 mit einer Steuerungseinheit 65 und miteinander verbunden. Ausgehend von der Erkenntnis, dass bestimmte Gebäudeteile bevorzugt von Vogelarten "passender" Grösse angeflogen werden, sind die Ultraschall-Resonatoren 3' auf die, auf diese wirksamen Frequenzen programmiert. Dadurch wird die Abstrahlung eines breiteren Frequnzbandes mit unwirksamen Frequenzen vermieden, so dass die jeweiligen Vogelarten durchgehend verscheucht werden.
Die Steuerungseinheit 65 ist auch geeignet, temperaturabhängige Frequenzanpassungen vorzunehmen (so sinkt z. B. eine Frequenz von 22,5 kHz bei 18°C auf ca. 20 kHz bei -20°C) um bei allen Witterungsbedingungen wirksame Frequenzen abstrahlen zu können.

### Bezugszeichenliste:

- 1: Vorrichtung
- 2: Gehäuse
- 3: Resonatoren
- 3': Ultraschallresonator
- 4: drehfeste Achse
- 5: Elektromotor
- 6: Getriebe
- 10: gabelförmige Halterung
- 10': Schwanenhals
- 11: Halterungsachse
- 20: Seitenflächen oder Abstrahlungsflächen
- 21: Ecknuten
- 22: zylindrische Mulden bzw. Resonatorraum
- 23: Kernmulde
- 24: zylindrischer Innenraum
- 25: aufgeschraubte Deckel
- 26: Schrauben
- 27: Ringwand
- 28: Bohrung
- 30: Schwingungsquarz
- 31: Membran
- 32: Schwingungsplatte
- 33: O-Ring
- 40: äusserer Lagerflansch
- 41: Kugellager
- 42: hohler Zapfen
- 43: Hohlschraube
- 44: Distanzbolzen
- 45: innerer Lagerflansch
- 46: Gleitlagerplatte
- 47: hohler Zapfen
- 48: topfförmige Hülse
- 49: umlaufender Kragen
- 60: Speiseleitungen
- 61: Schleifring
- 62: Stromabnehmer
- 63: Speiseleitungen zu Resonatoren
- 64: BUS-Leitung
- 65: Steuerungseinheit

## Patentansprüche

1. Vorrichtung (1) zum Vertreiben von Vögeln durch Beaufschlagung eines Raumbereiches mit Schalldruck resp. mit Schallschwingungen im Ultraschall- beziehungsweise ultraschallnahen Bereich, umfassend mindestens einen Resonator (3) zur Abstrahlung der Schallschwingungen, wobei der mindestens eine Resonator (3) an bzw. in einer Halterung (10) drehbar und/oder schwenkbar gelagert ist, wobei die Vorrichtung (1) ein Gehäuse (2) aufweist, in dem mindestens ein Resonator (3) angeordnet ist, **dadurch gekennzeichnet, dass** das Gehäuse (2) auf einer drehfesten Achse (4) gelagert ist, in der ein Elektromotor (5) und ein Getriebe (6) angeordnet sind und dass der Abtrieb des Getriebes auf das Gehäuse (2) wirkt und dieses in Drehbewegung versetzt wobei die Speisung der Resonatoren (3) und des Elektromotors durch die drehfeste Achse (4) hindurch erfolgt, und dass weiterhin der Resonator (3) in einem Resonatorraum (22) angeordnet ist.

2. Vorrichtung nach Anspruch 1, **dadurch gekennzeichnet, dass** die Halterung (10) gabelförmig ist und im Gehäuse (2) mindestens zwei Resonatoren (3) in Drehrichtung gleichmässig über den Umfang verteilt angeordnet sind oder dass die Halterung für jeweils einen Resonator (3) als ein Schwanenhals (10') angeordnet ist.

3. Vorrichtung (1) nach Anspruch 1, **dadurch gekennzeichnet, dass** die drehfeste Achse (4) zweigeteilt (4', 4") ist, wobei der erste Teil (4') dieser Achse (4) aus einem inneren (40) und einem äusseren (45) Lagerflansch besteht, wobei die Lagerflansche über Distanzbolzen (44) miteinander verbunden sind, so das der Elektromotor (5) und das Getriebe (6) zentrisch und achsial hintereinander zwischen den Lagerflanschen (40, 45)gehalten sind.

4. Vorrichtung (1) nach Anspruch 1, **dadurch gekennzeichnet, dass** das Gehäuse einen hohlen zylindrischen Innenraum (24) aufweist und aussen gleichmässig über den Umfang verteilt, Abstrahlflächen (20) in denen jeweils ein Resonator (3) in einem eingelassenen Resonatorraum (22) angeordnet ist, vorhanden sind.

5. Vorrichtung nach Anspruch 4, **dadurch gekennzeichnet, dass** der Innenraum (24) des Gehäuses (2) beidseitig durch aufgeschraubte Deckel (25) verschlossen ist und die drehfeste Achse (4) in den Deckeln (25) gelagert ist.

6. Vorrichtung (1) nach den Ansprüchen 3 und 4, **dadurch gekennzeichnet, dass** im zylindrischen Innenraum (24) des Gehäuses (2) eine radial nach innen gerichtete umlaufende Ringwand (27) am Gehäuse (2) angeformt ist, und dass weiterhin am Gehäuse (2) eine Gleitlagerplatte (46) befestigt ist, in der der innere Lagerflansch (45) des ersten Teiles (4') der zweigeteilten Achse (4) läuft.

7. Vorrichtung (1) nach den Ansprüchen 3 und 5, **dadurch gekennzeichnet, dass** der äussere, den Deckel (25) des Gehäuses (2) angrenzende Lagerflansch (40), einen angeformten Lagerzapfen (42) aufweist, welchen von einer Hohlschraube (43) durchsetzt ist, mittels der das Gehäuse (2) in der gabelförmigen Halterung (10) befestigt ist und durch die die Speiseleitungen (60) für den Elektromotor (5) geführt sind.

8. Vorrichtung (1) nach Anspruch 6, **dadurch gekennzeichnet, dass** der Abtrieb des Getriebes (7) den inneren Lagerflansch (45) durchsetzt und die Gleitlagerplatte (46) antreibt, die drehfest mit der Ringwand (27) des Gehäuses (2) verbunden ist.

9. Vorrichtung (1) nach den Ansprüchen 3 und 5, **dadurch gekennzeichnet, dass** der zweite Teil (4") der zweigeteilten drehfesten Achse (4) eine topfförmige Hülse (48) mit am offenen Ende umlaufenden Kragen (49) aufweist, dessen umlaufender Kragen (49) innenseitig mit jenem Deckel (25) verbunden ist, den er durchsetzt und mittels einer Hohlschraube (43) mit der gabelförmigen Halterung (10) verbunden ist.

10. Vorrichtung (1) nach Anspruch 9, **dadurch gekennzeichnet, dass** auf dem umlaufenden Kragen (49) ein elektrischer Schleifring (61) isoliert gehalten ist, der in elektrischer Verbindung steht mit einer Speiseleitungen (60) steht, die durch die Hohlschraube (43) eingeführt ist.

11. Vorrichtung (1) nach den Ansprüchen 4 und 10, **dadurch gekennzeichnet, dass** auf dem Schleifring (61) Stromabnehmer (62) aufliegen, die den Strom über einer Leitung (63) in die Resonatorräume (22) führen.

12. Vorrichtung (1) nach Anspruch 6, **dadurch gekennzeichnet, dass** der Innenraum (24) des Gehäuses (2) durch die Ringwand (27) und die Gleitlagerplatte (46) in einen Antriebsraum (4') und einen Speiseraum (4'') unterteilt ist.

13. Vorrichtung (1) nach Anspruch 1, **dadurch gekennzeichnet, dass** vom Speiseraum (4'') je eine Bohrung (28) in jeden Resonatorraum (22) führt.

14. Vorrichtung (1) nach Anspruch 11 oder 12, **dadurch gekennzeichnet, dass** der Stromabnehmer (62) innerhalb des Speiseraumes (4") mit dem Gehäuse (2) verbunden gehalten ist.

15. Vorrichtung nach einem der Ansprüche 1 bis 14, **dadurch gekennzeichnet, dass** mindestens zwei Vorrichtungen (1) vorgesehen sind, die miteinander verbunden sind.

16. Vorrichtung nach einem der Ansprüche 1 bis 15, **dadurch gekennzeichnet, dass** jede Vorrichtung (1) eine eigene Einheit bildet.

## Claims

1. A device (1) for scaring away birds by applying sound pressure or sound vibrations to a spatial area in the ultrasound and near-ultrasound range comprising at least one resonator (3) for emitting sound vibrations, wherein the at least one resonator (3) is rotatably and/or pivotably mounted in or on a holder (10), **characterised in that** the device (1) comprises a housing (2) in which at least one resonator (3) is arranged, wherein the housing (2) is mounted on a torque-proof axis (4) in which an electric motor (5) and a gear (6) are arranged and **in that** the output of the gear acts upon the housing (2) so as to make it rotate, wherein the supply of the resonators (3) and the electric motor is effected through the torque-proof axis (4), and **in that** further the resonator (3) is arranged in a resonator space (22).

2. The device according to claim 1, **characterised in that** the holder (10) is fork-shaped, and at least two resonators (3) are arranged evenly distributed across the circumference in the housing (2) in rotating direction or **in that** the holder for one resonator (3) respectively is arranged as a swan neck (10').

3. The device (1) according to claim 1, **characterised in that** the torque-proof axis (4) is divided in two parts (4', 4"), wherein the first part (4') of this axis (4) consists of an inner (40) and an outer (45) bearing flange, wherein the bearing flanges are connected with each other via distance bolts (44) so that the electric motor (5) and the gear 6 are held centrically and axially one behind the other between the bearing flanges (40, 45).

4. The device (1) according to claim 1, **characterised in that** the housing comprises a hollow cylindrical inner space (24) and **in that** emission surfaces (20) are present evenly distributed across the circumference, in each of which one resonator (3) is arranged in a recessed resonator space (22).

5. The device according to claim 4, **characterised in that** the inner space (24) of the housing (2) is closed on both sides by screwed-on lids (25) and the torque-proof axis (4) is mounted in the lids (25).

6. The device (1) according to claims 3 and 4, **characterised in that** a radially inward-facing circumferential ring wall (27) is moulded onto the housing (2) in the cylindrical inner space (24) of the housing (2), and **in that** further a sliding bearing plate (46), in which the inner bearing flange (45) of the first part (4') of the two-part axis (4) is running, is attached to the housing (2).

7. The device (1) according to claims 3 and 5, **characterised in that** the outer bearing flange (40) adjacent to the lid (25) of the housing (2) comprises a moulded-on bearing pin (42) penetrated by a hollow screw (43), by means of which the housing (2) is attached to the fork-shaped holder (10), and through which the supply lines (60) for the electric motor (5) are run.

8. The device (1) according to claim 6, **characterised in that** the output of the gear (7) passes through the inner bearing flange (45) and drives the sliding bearing plate (46), which is non-rotatably connected with the ring wall (27) of the housing (2).

9. The device (1) according to claims 3 and 5, **characterised in that** the second part (4") of the two-part torque-proof axis (4) comprises a pot-shaped sleeve (48) with a circumferential collar (49) at the open end, the circumferential collar being connected on the inside with that lid (25), through which it passes and which is connected with the fork-shaped holder (10) by means of a hollow screw (43).

10. The device (1) according to claim 9, **characterised in that** an electric collector ring (61) is held insulated on the circumferential collar (49) which is in electrical communication with a supply line (60) which is introduced through the hollow screw.

11. The device (1) according to claims 4 and 10, **characterised in that** current collectors (62) are resting on the collector ring (61), which current collectors conduct the current via a line (63) into the resonator spaces (22).

12. The device (1) according to claim 6, **characterised in that** the inner space (24) of the housing (2) is divided into a drive space (4') and a supply space (4") by the ring wall (27) and the sliding bearing plate (46).

13. The device (1) according to claim 1, **characterised in that** one bore (28) each leads from the supply space (4") into each resonator chamber (22).

14. The device (1) according to claim 11 or 12, **characterised in that** within the supply space (4") the current collector (62) is held connected with the housing (2).

15. The device according to one of claims 1 to 14, **characterised in that** at least two devices (1) are provided which are connected with each other.

16. The device according to one of claims 1 to 15, **characterised in that** each device (1) forms a separate entity.

## Revendications

1. Dispositif (1) pour l'éloignement d'oiseaux en soumettant une zone spatiale à une pression acoustique et/ou respectivement des vibrations acoustiques dans la plage des ultra-sons ou proche des ultra-sons, comprenant au moins un résonateur (3) pour émettre les vibrations acoustiques, l'au moins un résonateur (3) étant monté de manière à pouvoir tourner et/ou pivoter sur une fixation (10) ou dans celle-ci,
le dispositif (1) présentant un boîtier (2) dans lequel au moins un résonateur (3) est disposé,
**caractérisé en ce que** le boîtier (2) est monté sur un axe (4) solidaire en rotation dans lequel sont disposés un moteur électrique (5) et un mécanisme de commande (6) et **en ce que** l'entraînement du mécanisme de commande agit sur le boîtier (2) et met celui-ci en mouvement de rotation, moyennant quoi l'alimentation des résonateurs (3) et du moteur électrique s'effectue à travers l'axe (4) solidaire en rotation, et **en ce que** le résonateur (3) est par ailleurs disposé dans un espace de résonateur (22).

2. Dispositif selon la revendication 1, **caractérisé en ce que** la fixation (10) est en forme de fourchette et **en ce que**, dans le boîtier (2), au moins deux résonateurs (3) sont disposés de manière régulièrement répartie dans le sens de rotation sur la circonférence, ou bien **en ce que** la fixation est disposée en tant qu'un col de cygne (10') pour respectivement un résonateur (3).

3. Dispositif (1) selon la revendication 1, **caractérisé en ce que** l'axe solidaire en rotation (4) est partagé en deux (4', 4"), la première partie (4') de cet axe (4) se composant d'une bride de palier interne (40) et d'une bride de palier externe (45), les brides de palier étant reliées ensemble via des boulons d'écartement (44) de manière à ce que le moteur électrique (5) et le mécanisme de commande (6) soient maintenus de manière centrée et axiale l'un derrière l'autre entre les brides de palier (40, 45).

4. Dispositif (1) selon la revendication 1, **caractérisé en ce que** le boîtier présente un espace intérieur (24) cylindrique creux et **en ce qu'**il y a des surfaces d'émission (20) régulièrement réparties à l'extérieur sur la circonférence dans lesquelles respectivement un résonateur (3) est disposé dans un espace de résonateur (22) encastré.

5. Dispositif selon la revendication 4, **caractérisé en ce que** l'espace intérieur (24) du boîtier (2) est fermé des deux côtés par des couvercles (25) vissés dessus et **en ce que** l'axe solidaire en rotation (4) est logé dans les couvercles (25).

6. Dispositif (1) selon les revendications 3 et 4, **caractérisé en ce que**, dans l'espace intérieur (24) cylindrique du boîtier (2), une paroi annulaire (27) périphérique orientée radialement vers l'intérieur est formée sur le boîtier (2), et **en ce qu'**une plaque de palier lisse (46) est par ailleurs fixée sur le boîtier (2), dans laquelle passe la bride de palier interne (45) de la première partie (4') de l'axe (4) partagé en deux.

7. Dispositif (1) selon les revendications 3 et 5, **caractérisé en ce que** la bride de palier externe (40) adjacente au couvercle (25) du boîtier (2) présente un tourillon (42) formé dessus, lequel est traversé par une vis à tête creuse (43) à l'aide de laquelle le boîtier (2) est fixé dans la fixation (10) en forme de fourchette (10) et à travers laquelle on fait passer les lignes d'alimentation (60) pour le moteur électrique (5).

8. Dispositif (1) selon la revendication 6, **caractérisé en ce que** l'entraînement du mécanisme de commande (7) traverse la bride de palier interne (45) est actionne la plaque de palier lisse (46), laquelle est reliée de manière solidaire en rotation à la paroi annulaire (27) du boîtier (2).

9. Dispositif (1) selon les revendications 3 et 5, **caractérisé en ce que** la seconde partie (4") de l'axe (4) solidaire en rotation partagé en deux présente une gaine (48) en forme de pot avec un col (49) périphérique au niveau de l'extrémité ouverte, dont le col périphérique (49) est relié du côté intérieur à celui des couvercles (25) qu'il traverse et est relié à l'aide d'une vis à tête creuse (43) à la fixation (10) en forme de fourchette.

10. Dispositif (1) selon la revendication 9, **caractérisé en ce qu'**une bague glissante (61) électrique est maintenue de manière isolée sur le col (49) périphérique, laquelle est en liaison électrique avec une ligne d'alimentation (60) que l'on fait passer à travers la vis à tête creuse (43).

11. Dispositif (1) selon les revendications 4 et 10, **caractérisé en ce que** des récepteurs de courant (62) reposent sur la bague glissante (61), lesquels conduisent le courant via une ligne (63) dans les espaces de résonateur (22).

12. Dispositif (1) selon la revendication 6, **caractérisé en ce que** l'espace intérieur (24) du boîtier (2) est subdivisé par la paroi annulaire (27) et la plaque de palier lisse (46) en un espace d'entraînement (4') et un espace d'alimentation (4").

13. Dispositif (1) selon la revendication 1, **caractérisé en ce que** respectivement un alésage (28) s'étend, à partir de l'espace d'alimentation (4''), dans chaque espace de résonateur (22).

14. Dispositif (1) selon la revendication 11 ou 12, **caractérisé en ce que** le récepteur de courant (62) est maintenu relié au boîtier (2) à l'intérieur de l'espace d'alimentation (4").

15. Dispositif selon l'une des revendications 1 à 14, **caractérisé en ce que** l'on prévoit au moins deux dispositifs (1) qui sont reliés ensemble.

16. Dispositif selon l'une des revendications 1 à 15, **caractérisé en ce que** chaque dispositif (1) constitue une unité propre.
